# EUROPEAN PATENT SPECIFICATION

(11) **EP 3 215 778 B1**
(45) Date of publication and mention of the grant of the patent: **23.12.2020**
(21) Application number: 15857448.3
(22) Date of filing: 03.11.2015
(51) Int. Cl.: F16L 11/11, F16L 11/10, F16L 11/15, B63B 27/34, F16L 11/115, F16L 11/04, F17C 7/00

(54) **FLEXIBLE CRYOGENIC HOSE FOR LIQUEFIED NATURAL GAS (LNG) TRANSFERS**
FLEXIBLER KRYOGENER SCHLAUCH ZUR ÜBERTRAGUNG VON FLÜSSIGERDGAS (LNG)
TUYAU CRYOGÉNIQUE SOUPLE POUR DES TRANSFERTS DE GAZ NATUREL LIQUÉFIÉ (GPL)

(30) Priority: 05.11.2014 US 201462075747 P
(43) Date of publication of application: 13.09.2017
(73) Proprietor: Excelerate Energy Limited Partnership, The Woodlands, Texas 77380 (US)
(72) Inventor: LANE, Mark, K., Key Largo, FL 33037 (US)
(74) Representative: Talbot-Ponsonby, Daniel Frederick
(86) International application number: PCT/US2015/058800
(87) International publication number: WO 2016/073458

(56) References cited:
- DE-A1- 3 440 459
- GB-A- 1 312 509
- US-A- 5 600 752
- US-A1- 2006 124 189
- US-A1- 2010 024 911
- US-A1- 2012 012 221
- US-A1- 2014 216 591
- US-B1- 6 265 039

## Description

### BACKGROUND

### 1. FIELD OF THE INVENTION

Embodiments of the invention described herein pertain to the field of marine cryogenic transfer equipment More particularly, but not by way of limitation, one or more embodiments of the invention enable a flexible cryogenic hose for liquefied natural gas (LNG) transfers.

### 2. DESCRIPTION OF THE RELATED ART

It is often advantageous to transport natural gas, which is normally in gaseous form at ambient conditions, as a sub-cooled liquid referred to as liquefied natural gas (LNG). For example, although natural gas is typically transported from the location produced to the location consumed as a gas by pipeline, there are circumstances where doing so may not be feasible. For example, the location of production and the location of demand may be separated in such a manner that ocean transport aboard a vessel over much of the distance to market is more economically feasible than transport via pipeline. Without an effective way to transport the gas to a location where there is a commercial demand, opportunities to monetize the gas may be lost. As such, natural gas is often transported across the ocean in a liquefied state by vessel.

Liquefaction of natural gas facilitates storage and transportation of the gas. LNG, largely consisting of methane mixed with other hydrocarbon components, takes up only about 1/600 of the volume that the same amount of natural gas does in its gaseous state. LNG is produced by cooling the natural gas below its boiling point (about -160° C at atmospheric pressure, depending on cargo grade). The LNG may be transported and stored in cryogenic containers slightly above atmospheric pressure. Upon reaching the location of intended use, the LNG may be converted back to its gaseous form by adding heat and thereby raising the temperature above its boiling point.

LNG is typically stored and transported onboard cryogenic storage vessels called LNG carriers or LNG tankers, which are designed to carry LNG (mostly methane), or is sometimes stored on ethane carriers, which may also carry LNG. In each case, the natural gas is stored onboard a vessel in insulated storage tanks.

It is often desirable to transfer the LNG from one vessel to another vessel, a process termed "ship to ship transfer" (STS transfer). For example, it may be desirable to transfer LNG from a large LNG tanker to a smaller shuttle vessel in order to gain access to inland water locations. In another example, it may be desirable to transfer LNG from an LNG carrier used for long haul transportation to a regasification vessel moored at, or located nearby, a delivery location such as a power plant. In addition, STS transfers may become necessary if an LNG carrier transporting LNG is damaged in a collision mid-route, or otherwise becomes inoperable during a voyage. In such an instance, it may become necessary to transfer LNG cargo to a replacement vessel so that the replacement vessel may deliver the cargo.

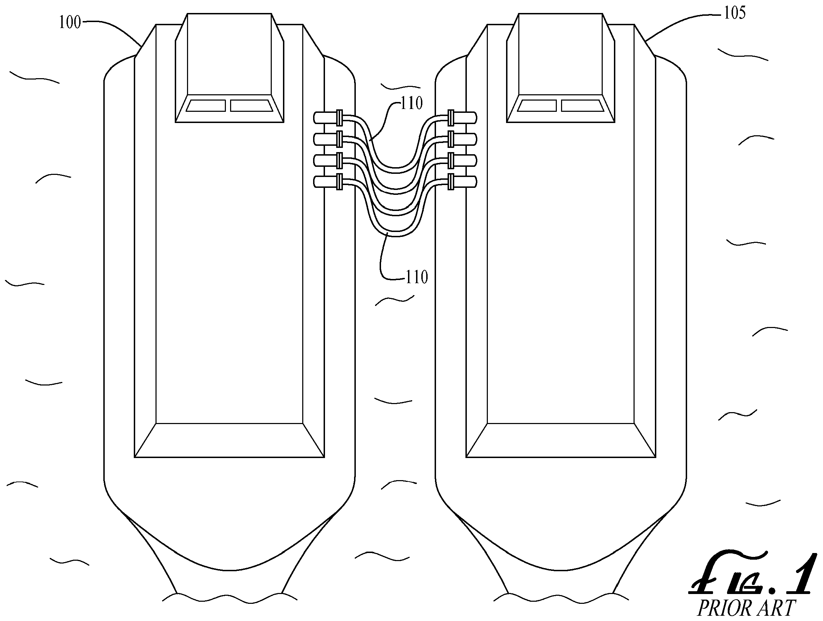

In order to conduct STS transfer operations, a flexible, composite cryogenic hose is typically employed to convey the LNG from the cargo tanks of one vessel into the cargo tanks of a second vessel. In the case of emergency transfers, conventionally, a set of three or four meter-long hoses may be stored onboard a carrier vessel, which hoses may be flanged together to make a jumper hose for unplanned events where a temporary piping arrangement may be needed. For planned transfers, a set of hoses about ten meters to twenty-five meters in length is typically employed. FIG. 1 illustrates a marine side-by-side STS transfer operation employing flexible hoses of the prior art. As shown in FIG. 1, supply vessel 100 is transferring cryogenic liquid through conventional hoses 110 to receiving vessel 105.

STS transfer hoses are conventionally constructed using an inner wire that is coiled around a mandrel. Over the wire are sheets of lining, typically polyester fabric lining for LNG hoses. The fabric is a cloth about eighteen inches wide that is wrapped onto the stainless steel coil like wrapping paper. Around the fabric layers is a final outer stainless steel wire. Stainless steel end flanges are screwed on and swaged in place to complete the hose.

A difficulty unique to STS transfers of LNG (as opposed to the transfer of other types of hydrocarbons), is the need to purge the hoses of remaining vapors at the completion of transfer operations, since the handling of a gassy hose containing natural gas does not meet certain risk protocols. Once the transfer of LNG has been completed, some natural gas remains inside the hoses. If the hoses are disconnected while still containing natural gas, vapors may be released into the atmosphere, which is undesirable due to safety concerns such as fire risk. As a result, LNG hoses are typically drained and purged once a transfer has been accomplished. Draining involves a water spray process that causes the LNG to evaporate back into the cargo system. Purging is a conventional practice that involves introducing ultra-dry nitrogen gas into the hose under pressure to remove by flushing or displacement the remaining methane and other natural gas vapors. Ideally, once a hose has been drained and purged, it may be disconnected. Conventionally, an acceptable level of methane remaining in the hose is less than 2% by volume. At this acceptable level the hose may be disconnected.

One problem that arises in STS transfer operations is that the inner layers of polyester fabric in the hoses trap natural gas. The trapped gas makes it difficult to purge the methane out of the hose carcass. Once the gas has been initially purged to an acceptable level, the carcass may then "bleed-off' methane, causing methane from the carcass to refill the hose. The bleed-off causes a cyclic draining, purging and waiting process that is time consuming, and neither the transferring nor receiving vessel can leave the transfer site until the hoses are disconnected. Delays caused by the repeated draining and purging of hoses may cause the delivery vessel to be late to depart the port or transfer location by as much as six to seven hours, resulting in demurrage. These delays may also cause additional safety concerns if advancing weather systems may adversely affect the safety of the vessels involved in the STS operation.

As is apparent from the above, current flexible STS hoses suffer from bleed-off and may cause delivery vessel delays. Therefore, there is a need for an improved flexible cryogenic hose for LNG transfers.

US2014/216591 describes a reinforced hose which can be used for LNG transport between a floating production, storage and offloading vessel and a LNG carrier.

GB1312509 describes a typical reinforced multilayer hose.

### SUMMARY

According to first, second and third aspects of the invention there is provided a cryogenic liquefied natural gas ship-to-ship transfer hose as defined in claim 1, a marine LNG transfer system as defined in claim 9 and a method of constructing a flexible cryogenic ship-to-ship transfer hose as defined in claim 10.

The disclosure generally relate to a flexible cryogenic hose for liquefied natural gas (LNG) transfers. A flexible cryogenic hose for LNG transfers is described.

An illustrative cryogenic liquefied natural gas (LNG) transfer hose includes an LNG transfer hose carcass including an inner coil forming an inner diameter of the LNG transfer hose carcass, at least one elongate sheath form-fitted about an outer surface of the inner coil, wherein the at least one elongate sheath is impermeable to natural gas, and an outer coil forming an outer diameter of the LNG transfer hose carcass. In some hoses, the at least one elongate sheath is made of a perfluorinated compound. In certain hoses, the at least one elongate sheath comprises polytetrafluoroethylene (PTFE). In some hoses, the at least one elongate sheath is made of high-modulus polyethylene (HMPE). In some hoses, the LNG transfer hose carcass includes a series of layers of polyester film and polyester fabric wrapped around the at least one elongate sheath and beneath the outer coil. In certain hoses, the LNG transfer hose carcass includes a layer of polyamide film wrapped around the series of layers of polyester film and polyester fabric, and wherein the outer coil is wound around the layer of polyamide film. In some hoses, the at least one elongate sheath is impermeable to LNG and gaseous natural gas. In certain hoses, the at least one elongate sheath is heat-shrunk about an outer surface of the inner coil. In some hoses, the at least one elongate sheath is stretchedly form-fitted about the outer surface of the inner coil.

An illustrative marine liquefied natural gas (LNG) transfer system includes a cryogenic flexible hose fluidly coupling a transferring LNG carrier located offshore and an LNG receiving vessel, the cryogenic flexible hose including a coil, at least one natural gas impermeable elongate sheath form-fit about an outer surface of the coil, and wherein LNG flows through the cryogenic flexible hose during transfer of the LNG between the transferring LNG carrier and the LNG receiving vessel. In some systems, there are two of the natural gas impermeable elongate sheaths form-fit about an outer surface of the coil, and wherein the two elongate sheaths are layered in series. In some systems, the cryogenic flexible hose further includes a second coil coupled around the at least one natural gas impermeable elongate sheath. In certain systems, the cryogenic flexible hose further includes a series of layers of polyester film and polyester fabric wrapped around the at least one elongate sheath beneath the second coil. In some systems, the at least one elongate sheath is made of polytetrafluoroethylene (PTFE). In certain systems, the at least one elongate sheath is one of heat-shrunk form-fit, stretchedly form-fit, or a combination thereof.

An illustrative method of constructing a flexible cryogenic hose for liquefied natural gas (LNG) transfer includes winding an inner stainless steel coil about a rotating mandrel to form a tubular skeleton, placing a polytetrafluoroethylene (PTFE) tubular sheath longitudinally around the inner stainless steel coil to form a natural gas barrier, wrapping a series of layers of polyester fabric and polyester film about the PTFE tubular sheath, enfolding a covering of polyamide film around the series of layers of polyester fabric and polyester film, winding an outer stainless steel coil about the covering polyamide film to form a tubular carcass, removing the tubular carcass from the mandrel, and applying a stainless steel fitting to each end of the carcass to form an LNG transfer hose.

An illustrative cryogenic liquefied natural gas (LNG) transfer system includes a plurality of polytetrafluoroethylene (PTFE) tubular sheaths forming an LNG transfer hose.

An illustrative flexible cryogenic conveyant transfer hose system includes a cryogenic conveyant having a transfer temperature of between -196 °C and -120 °C, a flexible cryogenic conveyant transfer hose including at least one elongate sheath forming a barrier between an inner diameter of the flexible cryogenic conveyant transfer hose and carcass material outwards of the at least one elongate sheath, and wherein the at least one elongate sheath is impermeable to the cryogenic conveyant flowing through the inner diameter. In some systems, the cryogenic conveyant is liquefied natural gas (LNG) and the transfer temperature is between -125 °C and -160 °C. In certain systems, the at least one elongate sheath comprises a perfluorinated polymer. In some systems, the at least one elongate sheath is made of polytetrafluoroethylene (PTFE). In certain systems, the at least one elongate sheath is made of high-modulus polyethylene (HMPE). In some systems, the at least one elongate sheath is one of shrink-fit, stretched, or a combination thereof around a coil of the flexible cryogenic conveyant transfer hose. In certain systems, the carcass material outwards of the at least one elongate sheath includes polyester fabric and polyester film.

In further embodiments, features from specific embodiments may be combined with features from other embodiments. For example, features from one embodiment may be combined with features from any of the other embodiments. In further embodiments, additional features may be added to the specific embodiments described herein.

### BRIEF DESCRIPTION OF THE DRAWINGS

Advantages of the present invention may become apparent to those skilled in the art with the benefit of the following detailed description and upon reference to the accompanying drawings in which:
FIG. 1 is a perspective view of a side-by-side ship to ship transfer system of the prior art.
FIG. 2 is a partial perspective view of an illustrative embodiment of a flexible cryogenic hose.
FIG. 3 is a cross sectional view across line 3-3 of FIG. 2 of an illustrative embodiment of a carcass of an exemplary flexible cryogenic hose.
FIG. 4 is an enlarged view of FIG. 3 of layers of a carcass of an illustrative embodiment.
FIG. 5 is a schematic diagram of surrounding a coil with a sheath of an illustrative.
FIG. 6 is a schematic diagram of a sheath of an illustrative embodiment shrink-fit onto a coil.
FIG. 7 is a cross sectional view across line 7-7 of FIG. 2 of a flexible cryogenic hose of an illustrative embodiment having a cryogenic conveyant flowing through the exemplary hose.

While the invention is susceptible to various modifications and alternative forms, specific embodiments thereof are shown by way of example in the drawings and may herein be described in detail. The drawings may not be to scale. It should be understood, however, that the embodiments described herein and shown in the drawings are not intended to limit the invention to the particular form disclosed, but on the contrary, the intention is to cover all modifications, equivalents and alternatives falling within the scope of the present invention as defined by the appended claims.

### DETAILED DESCRIPTION

A flexible cryogenic hose for liquefied natural gas (LNG) transfers will now be described. In the following exemplary description, numerous specific details are set forth in order to provide a more thorough understanding of embodiments of the invention. It will be apparent, however, to an artisan of ordinary skill that the present invention may be practiced without incorporating all aspects of the specific details described herein. In other instances, specific features, quantities, or measurements well known to those of ordinary skill in the art have not been described in detail so as not to obscure the invention. Readers should note that although examples of the invention are set forth herein, the claims, and the full scope of any equivalents, are what define the metes and bounds of the invention.

As used in this specification and the appended claims, the singular forms "a", "an" and "the" include plural referents unless the context clearly dictates otherwise. Thus, for example, reference to a hose includes one or more hoses.

"Coupled" refers to either a direct connection or an indirect connection (e.g., at least one intervening connection) between one or more objects or components. The phrase "directly attached" means a direct connection between objects or components.

As used herein, the term "offshore," with respect to a cryogenic conveyant transfer operation, means at least partially on a navigable body of water. Thus for example, an LNG transfer operation taking place in the open ocean, between two vessels moored at or near a dock, or between one vessel and a dock or the shore may be an offshore ship-to-ship (STS) transfer and/or offshore LNG transfer.

One or more embodiments provide a flexible cryogenic hose for LNG transfers. While so as not to obscure the invention, illustrative embodiments are described in terms of an LNG side-by-side STS transfer operation, nothing herein is intended to limit the invention to that embodiment. Illustrative embodiments may be equally applicable to tandem transfers, transfers of other cryogenic fluids that may absorb into hose carcasses and bleed-off such as nitrogen, hydrogen, oxygen, ethane, propane or butane, and/or onshore transfers.

Illustrative embodiments of a flexible cryogenic hose for LNG transfers are described. An illustrative embodiment of a flexible, cryogenic LNG transfer hose may include one or more natural gas impermeable sheaths, such as polytetrafluoroethylene (PTFE) sheaths. The sheaths may smoothly slide, shrink and/or stretch around the entire length of a stainless steel 316 coil and snugly fit about the coil. A series of polyester fabric and polyester film layers may be wrapped over the sheaths, followed by a polyamide outer cover that may serve as a logo sheet. A final outer stainless steel coil may complete the carcass construction. The one or more sheaths of illustrative embodiments may create a barrier inside the hose carcass that is impermeable to natural gas and/or LNG. The barrier may prevent absorption of natural gas into the hose carcass and reduce or eliminate bleed-off. Reducing or eliminating bleed-off may reduce the time necessary to drain and purge the hose at the completion of STS transfer operations, which may save demurrage and may alleviate safety concerns due to advancing weather systems.

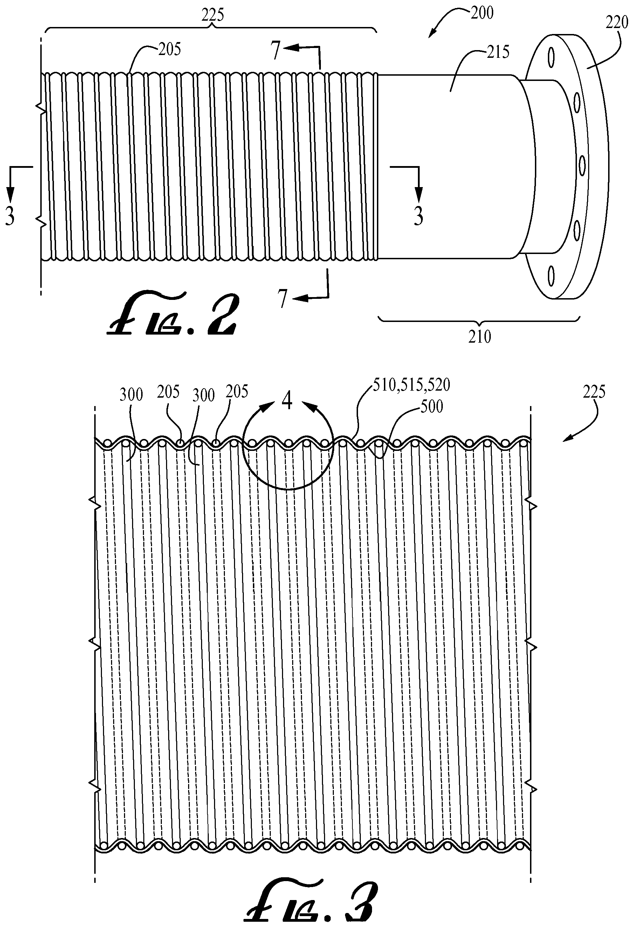

FIG. 2 illustrates an exemplary cryogenic hose of an illustrative embodiment. Hose 200 may be flexible, tubular and/or elongate in shape such that LNG, natural gas and/or another cryogenic liquid and/or its associated gas may flow through its inner diameter (the inside of hose 200). Hose 200 may be between one and sixteen inches in diameter, inclusive, and up to one-hundred feet long. In embodiments where hose 200 is a jumper hose, it may be shorter in length, for example between nine feet and fifteen feet in length. In an illustrative embodiment, hose 200 may have a maximum elongation of about 10% on proof pressure, an electrical resistance of less than 1.0 ohm/m for bore sizes of 2 inches and above, a maximum twist of about 10 degrees p/m, a maximum working pressure of about 150 psi (10.5 bar) and/or a temperature range from -196 °C up to +50 °C.

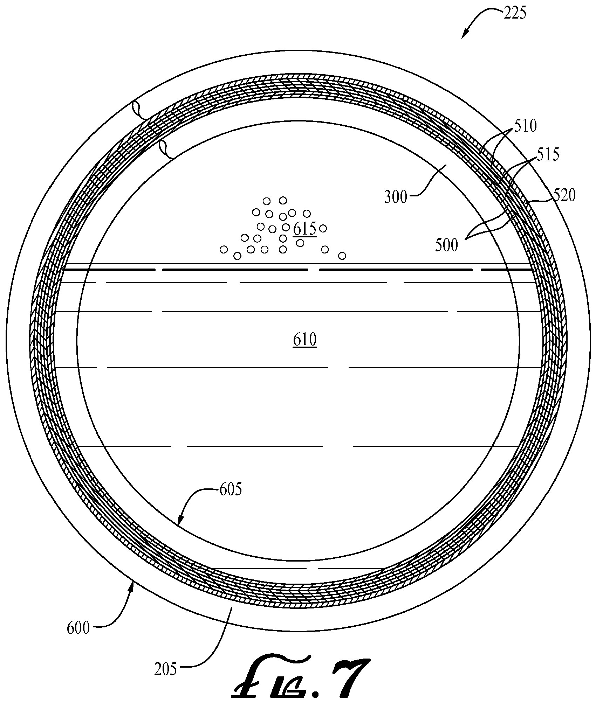

As shown in FIG. 2 and FIG. 7, cryogenic hose 200 includes a stainless steel outer coil 205 spring-wound and/or wrapped about the outer surface of carcass 225 of cryogenic hose 200. Fitting 210 may be stainless steel and secured to one or both ends of carcass 225 to form a spout, which fitting may include collar 215 and flange 220. Fitting 210 should be applied tensely so as to be gas tight. Collar 215 may be squeezed and/or slid into place. The end of carcass 225 where collar 215 may be applied may be taped, for example using duct tape, prior to application of collar 215 in order to hold the layers of carcass 225 in place during application. Flange 220 may be screwed and/or secured onto collar 215.

FIG. 3 illustrates an exemplary hose carcass 225. Carcass 225 may be constructed on a rotatable mandrel such that layers of carcass 225 may be easily wrapped about one another. As shown in FIG. 3 and in FIG. 7, carcass 225 may include both an outer coil 205 and an inner coil 300. Inner coil 300 may define inner diameter 605 of hose 200 and/or carcass 225, and outer coil 205 may define outer diameter 600 of hose 200 and/or carcass 225. Depending upon the spacing between windings of inner coil 300 and outer coil 205, sheath 500 and cover layer 520 may also contribute to defining inner diameter 605 and outer diameter 600, respectively. Both inner coil 300 and outer coil 205 may be 316 stainless steel, galvanized steel or another material with similar properties. As shown in FIG. 3, outer coil 205 and inner coil 300 may be offset from one another or biased such that the two layers interlock. For example outer coil 205 may fit within the gaps in the inner coil 300. Inner carcass 225 lining may be sandwiched in between inner coil 300 and outer coil 205.

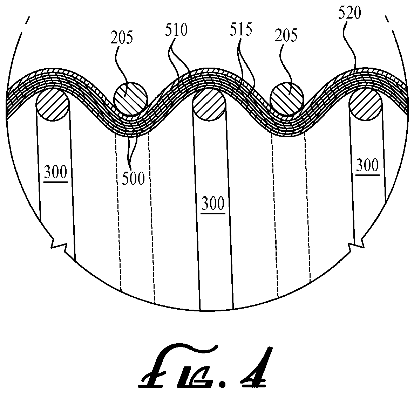

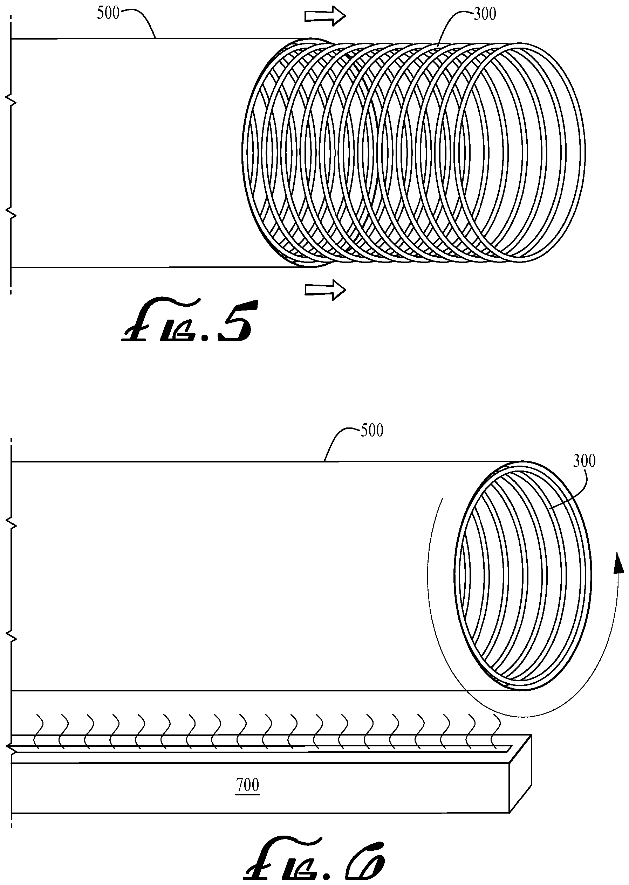

FIG. 4 illustrates the layers of inner carcass 225 materials and/or lining of hose 200 of illustrative embodiments. As shown in FIG. 4 and FIG. 7, one or more sheaths 500 may extend over inner coil 300, and underneath film layers 510, fabric layers 515, cover layer 520 and/or other lining materials making up carcass 225. As shown in FIG. 5 and FIG. 6, sheath 500 may slide, stretch and/or be snug-fit entirely around the outer longitudinal surface of inner coil 300. Sheath 500 may be elongate and/or tubular in shape and may slide, form-fittingly over, and/or stretch about the entire length of inner coil 300 in a fashion similar to footless pantyhose. In some embodiments, sheath 500 may be initially larger than inner coil 300 and may be heat sensitive and/or shrink-form about inner coil 300 such that inner coil 300 and sheath 500 fit tightly together. In heat shrinking embodiments, sheath 500 may be warmed with heater 700 in order to shrink-fit sheath 500 about inner coil 300, for example as illustrated in FIG. 6. As shown in FIG. 6, a mandrel (not shown) supporting sheath 550 and inner coil 300 may be rotated circumferentially to form-fit sheath 500 to inner coil 300 around the circumference of coil 300. The time to heat-shrink and the amount of heat (Btus) may vary with the material of sheath 500 and/or the thickness of sheath 500.

One or more conveyant-impermeable sheaths 500 may overlay the entire outer longitudinal surface of inner coil 300 to form a barrier to conveyants flowing through inner diameter 605 of carcass 225 of hose 200. As shown in FIG. 7, when liquid conveyant 610 and/or gas conveyant 615 flows through inner diameter 605 of carcass 225, such fluid may contact inner coil 300 and/or the inside of sheath 500, but not fabric layers 515 or film layers 510. Gas conveyant 615 may be boil-off from cryogenic liquid conveyant 610. For example where liquid conveyant 610 is LNG, gas conveyant 615 may be natural gas that may otherwise be absorbed by fabric layers 515 and/or film layers 510 without the benefit of illustrative embodiments.

Sheath 500 may be made of a stretchable, shrinkable and/or form-fitting material and may be impermeable to natural gas, LNG and/or another cryogenic conveyant and its associated boil-off transferred through hose 200. Sheath 500 may remain substantially flexible, not crack and/or not harden at cryogenic temperatures of about -160 °C or above, or about -196 °C or above. For example a synthetic flouroplastic such as polytetrafluoroethylene (PTFE), more commonly known as Hostaflon or Teflon® (a registered trademark of E. I. Du Pont De Nemours and Company) may be employed as sheath 500. Other similar perfluorinated compounds and/or perflourinated polymers may be employed as sheath 500. Thermoplastic polyethylene such as high-modulus polyethylene (HMPE), polyvinylchloride and/or materials falling within the class of polypropylenes, polyethylenes and/or polyolefins having characteristics that meet the requirements described herein may also be employed for sheath 500.

Sheath 500 may be smooth without any gaps, holes, ridges and/or imperfections and may be slideable, stretchable over, and/or tightly fit about inner coil 300 with minimal friction. One, two or three or more sheaths 500 may be layered over inner coil 300 to create a natural gas and/or LNG impermeable layer, which may reduce or eliminate seepage of gas through sheath 500 and into the lining of carcass 225 outwards of sheath 500, for example film layers 510 or fabric layers 515. In embodiments where two or more sheaths 500 are employed, sheaths 500 may be layered on top of one another in series and/or sheaths 500 may be next to one another with edges of sheaths 500 overlapping to avoid any breaks in the natural gas impermeable barrier provided by sheath 500. The ends of sheath 500 may be tucked and swaged into end fittings 210 along with the other film layers 510, fabric layers 515 and coils 300, 205 of hose carcass 225. Sheath 500 may be about 300-600 gauge in thickness (3-6 mil in an inch bases system of units), depending upon the material selected for sheath 500.

Returning to FIG. 4, a series of fabric layers 515 and film layers 510 may be included in the lining of carcass 225 of hose 200 and be wrapped around sheath 500 between inner coil 300 and outer coil 205. Fabric layers 515 may, for example, be polyester fabric such as polyethylene terephthalate (PET). Fabric layers 515 may be applied over sheath 500 by wrapping fabric layers 515 in a fashion similar to wrapping paper. Film layers 510 may be polyester film about 0.2 mm thick and about eighteen inches wide, and may be wrapped over fabric layers 515 in a similar fashion to the wrapping of fabric layers 515. Melinex® (a registered trademark of Imperial Chemical Industries PLC) and Mylar® (registered trademark of Dupont Teijin Films US Limited Partnership) are exemplary suitable polyester films. The edges of the film layers 510 and/or fabric layers 515 may overlap such that the underlying sheath 500 is completely covered. In some embodiments, the layering of fabric layers 515 and film layers 510 may be reversed such that film layers 510 wrap about sheath 500 and fabric layers 515 wrap around film layers 510. Lining outer covering 520 may be polyamide film, and may be placed around the last fabric layer 515, and/or film layer 510. Ultramid® (a registered trademark of BASF Aktiengesellschaft) is an exemplary polyamide film that may be employed as lining outer covering 520. Lining outer covering 520 may be used as a logo sheet.

In an exemplary embodiment, hose carcass 225 may be layered as follows: (1) an inner stainless steel 316 coil 300, (2) one, two or more sheaths 500 tightly fit around inner coil 300, (3) two fabric layers 515, which maybe polyester fabric, wrapped about sheath 500, (4) two film layers 510, which may be polyester film, wrapped about the two fabric layers 515 (5) four fabric layers 515, (6) two film layers 510, (7) four fabric layers 515, (8) a continued series of four fabric layers 515 followed by two film layers 510, (9) a lining outer covering 520 of polyamide film, and (10) outer stainless steel coil 205. In some embodiments there may be between forty and seventy layers of film layers 510 and fabric layers 515 in between sheath 500 and outer coil 205. Other lining layers may be employed depending upon the substance conveyed and the temperature of the conveyed substance. For example, Bi-Oriented Polypropylene (BOPP) film may be employed in carcass 225 lining where a conveyant is colder than -200 °C.

Illustrative embodiments may impose a natural gas or other cryogenic conveyant impermeable layer inside a cryogenic hose carcass, inwards of hose fabric and/or film lining. Sheath 500 barrier may prevent absorption of natural gas (or other conveyant gasses) into carcass 225, for example preventing and/or reducing natural gas seepage into fabric layers 515, film layers 510 and/or other hose lining. Illustrative embodiments may reduce bleed-off and/or the time required to drain and purge hoses used in LNG transfer operations, such as offshore and/or STS transfer operations. Reducing the time to drain and purge hoses may assist in preventing delays in cargo delivery and vessel schedules, reduce demurrage and may alleviate safety concerns from advancing weather systems.

A flexible cryogenic hose for liquefied natural gas (LNG) transfers has been described. Changes may be made in the elements described herein without departing from the scope as described in the following claims.

## Claims

1. A cryogenic liquefied natural gas (LNG) ship-to-ship transfer hose (200) comprising:
an LNG transfer hose carcass (225) comprising:
an inner coil (300) forming an inner diameter of the LNG transfer hose carcass;
at least one elongate sheath (500) form-fitted onto an outer surface of the inner coil underneath any other lining materials making up the carcass , wherein the at least one elongate sheath is impermeable to natural gas and made of high-modulus polyethylene, HMPE, or polytetrafluoroethylene, PTFE; and
an outer coil (205) forming an outer diameter of the LNG transfer hose carcass.

2. The cryogenic LNG transfer hose of claim 1, wherein the at least one elongate sheath (500) is one of heat-shrunk, form-fit, stretchedly form-fit, or a combination thereof.

3. The cryogenic LNG transfer hose of any one of the preceding claims, wherein the LNG transfer hose carcass (225) further comprises at least one layer of polyester fabric (515) wrapped around the at least one elongate sheath (500) and beneath the outer coil (205).

4. The cryogenic LNG transfer hose of any one of the preceding claims, wherein the LNG transfer hose carcass (225) further comprises a series of layers of polyester film (510) and polyester fabric (515) wrapped around the at least one elongate sheath (500) and beneath the outer coil (205), wherein there are, optionally, at least fifty layers in the series of polyester fabric and polyester film layers,

5. The cryogenic LNG transfer hose of any one of the preceding claims, wherein the LNG transfer hose carcass (225) further comprises a layer of polyamide film (520) wrapped around the series of layers of polyester film (510) and polyester fabric (515), and wherein the outer coil (205) is wound around the layer of polyamide film.

6. The cryogenic LNG transfer hose of any one of the preceding claims, wherein the inner coil is 316 stainless steel.

7. The cryogenic LNG transfer hose of any one of the preceding claims, wherein the at least one elongate sheath (500) is impermeable to LNG and gaseous natural gas.

8. The cryogenic LNG transfer hose of any one of the preceding claims, wherein there are two elongate sheaths (500) layered in series.

9. A marine liquefied natural gas (LNG) transfer system comprising:
a cryogenic flexible hose according to any one of the preceding claims and fluidly coupling a transferring LNG carrier located offshore and an LNG receiving vessel, wherein LNG flows through the cryogenic flexible hose during transfer of the LNG between the transferring LNG carrier and the LNG receiving vessel.

10. A method of constructing a flexible cryogenic ship-to-ship transfer hose (200) for liquefied natural gas (LNG) transfer comprising:
winding an inner stainless steel coil (300) about a rotating mandrel to form a tubular skeleton;
placing a polytetrafluoroethylene (PTFE) tubular sheath (500) longitudinally around the inner stainless steel coil to form a natural gas barrier;
wrapping a series of layers of polyester fabric (515) and polyester film (510) about the PTFE tubular sheath;
enfolding a covering of polyamide film (510) around the series of layers of polyester fabric and polyester film;
winding an outer stainless steel coil (225) about the covering polyamide film to form a tubular carcass (225);
removing the tubular carcass from the mandrel; and
applying a stainless steel fitting to each end of the carcass to form an LNG transfer hose.

11. A flexible cryogenic conveyant transfer hose system comprising:
a cryogenic conveyant (610) having a transfer temperature of between -196 °C and -120°C;
a flexible cryogenic conveyant transfer hose (200) according to any one of claims 1 to 8, wherein the at least one elongate sheath (500) is impermeable to the cryogenic conveyant flowing through the inner diameter.

12. The flexible cryogenic conveyant transfer hose system of claim 11, wherein the cryogenic conveyant (610) is liquefied natural gas (LNG) and the transfer temperature is between -125 °C and -160 °C.

13. The flexible cryogenic conveying transfer hose system of claim 11, wherein the cryogenic conveyant (610) is oxygen.

## Patentansprüche

1. Kryogener Schiff-zu-Schiff-Übertragungsschlauch (200) für Flüssigerdgas (LNG), Folgendes umfassend:
eine LNG-Übertragungsschlauch-Karkasse (225), Folgendes umfassend:
eine innere Spule (300), die einen Innendurchmesser der LNG-Übertragungsschlauch-Karkasse bildet;
mindestens eine längliche Umhüllung (500), welche formschlüssig an einer Außenfläche der inneren Spule unter etwaigen anderen Auskleidungsmaterialien angebracht ist, welche die Karkasse bilden,
wobei die mindestens eine längliche Umhüllung für Erdgas undurchlässig ist und aus hochmoduligem Polyethylen, HMPE, oder Polytetrafluorethylen, PTFE besteht; und
eine äußere Spule (205), die einen Außendurchmesser der LNG-Übertragungsschlauch-Karkasse bildet.

2. Kryogener Übertragungsschlauch für LNG nach Anspruch 1, wobei die mindestens eine längliche Umhüllung (500) eine von einer warmgeschrumpften Umhüllung, einer formschlüssigen Umhüllung, einer dehnbar formschlüssigen Umhüllung oder einer Kombination daraus ist.

3. Kryogener Übertragungsschlauch für LNG nach einem der vorhergehenden Ansprüche, wobei die LNG-Übertragungsschlauch-Karkasse (225) ferner mindestens eine Schicht aus Polyesterstoff (515) umfasst, welche um die mindestens eine längliche Umhüllung (500) und unterhalb der äußeren Spule (205) gewunden ist.

4. Kyogener Übertragungsschlauch für LNG nach einem der vorhergehenden Ansprüche, wobei die LNG-Übertragungsschlauch-Karkasse (225) ferner eine Reihe Schichten aus Polyesterfilm (510) und Polyesterstoff (515) umfasst, welche um die mindestens eine längliche Umhüllung (500) und unterhalb der äußeren Spule (205) gewunden ist, wobei es wahlweise mindestens fünfzig Schichten in der Reihe aus Polyesterstoff- und Polyesterfilmschichten gibt,

5. Kryogener Übertragungsschlauch für LNG nach einem der vorhergehenden Ansprüche, wobei die LNG-Übertragungsschlauch-Karkasse (225) ferner eine Schicht aus Polyamidfilm (520) umfasst, welche um die Reihe aus Polyesterfilm- (510) und Polyesterstoffschichten (515) gewunden ist, wobei die äußere Spule (205) um die Polyamidfilmschicht gewunden ist.

6. Kryogener Übertragungsschlauch für LNG nach einem der vorhergehenden Ansprüche, wobei die innere Spule aus rostfreiem Stahl 316 besteht.

7. Kryogener Übertragungsschlauch für LNG nach einem der vorhergehenden Ansprüche, wobei die mindestens eine längliche Umhüllung (500) für LNG und gasförmiges Erdgas undurchlässig ist.

8. Kryogener Übertragungsschlauch für LNG nach einem der vorhergehenden Ansprüche, wobei es zwei längliche Umhüllungen (500) gibt, welche in Reihe geschichtet sind.

9. Hochsee-Übertragungssystem für Flüssigerdgas (LNG), Folgendes umfassend:
einen flexibeln kryogenen Schlauch nach einem der vorhergehenden Ansprüche, welcher fluidisch einen offshore befindlichen übertragenden LNG-Träger mit einem LNG aufnehmenden Schiff koppelt, wobei das LNG durch den flexiblen kryogenen Schlauch im Zuge der Übertragung des LNG zwischen dem übertragenden LNG-Träger und dem LNG-aufnehmenden Schiff strömt.

10. Verfahren zum Bau eines flexiblen kryogenen Schiff-zu-Schiff-Übertragungsschlauchs (200) zur Übertragung von Flüssigerdgas (LNG), Folgendes umfassend:
Winden einer inneren Spule aus rostfreiem Stahl (300) um einen drehenden Dorn zum Bilden eines röhrenförmigen Skeletts;
Platzieren einer rohrförmigen Umhüllung (500) aus Polytetrafluorethylen (PTFE) in Längsrichtung um die innere Spule aus rostfreiem Stahl zum Bilden einer Erdgasbarriere;
Winden einer Reihe von Schichten aus Polyesterstoff (515) und Polyesterfilm (510) um die röhrenförmige PTFE-Umhüllung;
Umschlagen einer Abdeckung aus Polyamidfilm (510) um die Reihe aus Polyesterstoff- und Polyesterfilmschichten;
Winden einer äußeren Spule aus rostfreiem Stahl (225) um den abdeckenden Polyamidfilm zum Bilden einer röhrenförmigen Karkasse (225);
Entfernen der röhrenförmigen Karkasse von dem Dorn; und
Aufbringen eines Fittings aus rostfreiem Stahl an jedem Ende der Karkasse zum Bilden eines LNG-Übertragungsschlauchs.

11. Flexibles Übertragungsschlauchsystem für kryogenes Fördergut, Folgendes umfassend:
ein kryogenes Fördergut (610), welches eine Übertragungstemperatur zwischen - 196 °C und -120°C aufweist;
einen flexiblen Übertragungsschlauch (200) für kryogenes Fördergut nach einem der Ansprüche 1 bis 8, wobei die mindestens eine längliche Umhüllung (500) für das durch den Innendurchmesser strömende kryogene Fördergut undurchlässig ist.

12. Flexibles Übertragungsschlauchsystem für kryogenes Fördergut nach Anspruch 11, wobei das kryogene Fördergut (610) Flüssigerdgas (LNG) ist und die Übertragungstemperatur zwischen -125 °C und -160 °C beträgt.

13. Flexibles Übertragungsschlauchsystem für kryogenes Fördergut nach Anspruch 11, wobei das kryogene Fördergut (610) Sauerstoff ist.

## Revendications

1. Tuyau cryogénique de transfert (200) de navire à navire de gaz naturel liquéfié (GNL) comprenant :
une carcasse de tuyau de transfert de GNL (225) comprenant :
une spirale intérieure (300) formant un diamètre intérieur de la carcasse de tuyau de transfert de GNL,
au moins une gaine allongée (500) ajustée par liaison de forme sur une surface extérieure de la spirale intérieure sous de quelconques autres matières de garnissage constituant la carcasse,
dans lequel la au moins une gaine allongée est imperméable au gaz naturel liquéfié et est constituée de polyéthylène à haut module (HMPE) ou de polytétrafluoroéthylène (PTFE), et
une spirale extérieure (205) formant un diamètre extérieur de la carcasse de tuyau de transfert de GNL.

2. Tuyau cryogénique de transfert de GNL selon la revendication 1, dans lequel la au moins une gaine allongée (500) est l'une parmi une gaine thermorétractable, à adaptation de forme,à adaptation de forme en étirement, ou présente une combinaison de ces caractéristiques.

3. Tuyau cryogénique de transfert de GNL selon l'une quelconque des revendications précédentes, dans lequel la carcasse de tuyau de transfert de GNL (225) comprend en outre au moins une couche de tissu polyester (515) enroulée autour de la au moins une gaine allongée (500) et en dessous de la spirale extérieure (205).

4. Tuyau cryogénique de transfert de GNL selon l'une quelconque des revendications précédentes, dans lequel la carcasse de tuyau de transfert de GNL (225) comprend en outre une série de couches de film polyester (510) et de tissu polyester (515) enroulées autour de la au moins une gaine allongée (500) et en dessous de la spirale extérieure (205), dans lequel il y a, optionnellement, au moins cinquante couches dans la série de couches de tissu polyester et de film polyester

5. Tuyau cryogénique de transfert de GNL selon l'une quelconque des revendications précédentes, dans lequel la carcasse de tuyau de transfert de GNL (225) comprend en outre une couche de film polyamide (520) enroulée autour de la série de couches de film polyester (510) et de tissu polyester (515), et dans lequel la spirale extérieure (205) est enroulée autour de la couche de film polyamide.

6. Tuyau cryogénique de transfert de GNL selon l'une quelconque des revendications précédentes, dans lequel la spirale intérieure est en acier inoxydable 316.

7. Tuyau cryogénique de transfert de GNL selon l'une quelconque des revendications précédentes, dans lequel la au moins une gaine allongée (500) est imperméable au GNL et au gaz naturel gazeux.

8. Tuyau cryogénique de transfert de GNL selon l'une quelconque des revendications précédentes, dans lequel il y a deux gaines allongées (500) stratifiées en série.

9. Système maritime de transfert de gaz naturel liquéfié (GNL) comprenant :
un tuyau flexible cryogénique selon l'une quelconque des revendications précédentes et un accouplement fluidique entre un méthanier de transfert de GNL offshore et un navire de réception de GNL, dans lequel le GNL s'écoule à travers le tuyau flexible cryogénique pendant le transfert du GNL entre le méthanier de transfert de GNL et le navire de réception de GNL.

10. Procédé de construction d'un tuyau flexible (200) cryogénique de transfert de navire à navire de gaz naturel liquéfié (GNL) comprenant les étapes suivantes :
enrouler une spirale intérieure d'acier inoxydable (300) autour d'un mandrin tournant pour former un squelette tubulaire,
disposer une gaine tubulaire (500) de polytétrafluoroéthylène (PTFE) longitudinalement autour de la spirale intérieure en acier inoxydable pour former une barrière au gaz naturel,
enrouler une série de couches de tissu polyester (515) et de film polyester (510) autour de la gaine tubulaire de PTFE,
envelopper un habillage de film polyamide (510) autour de la série de couches de tissu polyester et de film polyester,
enrouler une spirale extérieure en acier inoxydable (225) autour de l'habillage de film polyamide pour former une carcasse tubulaire (225),
enlever la carcasse tubulaire du mandrin, et
appliquer un raccord en acier inoxydable à chaque extrémité de la carcasse pour former un tuyau de transfert de GNL.

11. Système de tuyau flexible de transfert de fluide cryogénique transporté comprenant :
un fluide cryogénique transporté (610) ayant une température de transfert entre - 196 °C et -120 °C,
un tuyau flexible de transfert (200) de fluide transporté cryogénique selon l'une quelconque des revendications 1 à 8, dans lequel la au moins une gaine allongée (500) est imperméable au fluide cryogénique transporté s'écoulant à travers le diamètre intérieur.

12. Système de tuyau flexible de transfert de fluide cryogénique transporté selon la revendication 11, dans lequel le fluide cryogénique transporté (610) est du gaz naturel liquéfié (GNL) et la température de transfert est entre -125 °C et -160 °C.

13. Système de tuyau flexible de transfert de fluide transporté cryogénique selon la revendication 11, dans lequel le fluide cryogénique transporté (610) est de l'oxygène.
